(19) **Europäisches Patentamt**
**European Patent Office**
**Office européen des brevets**

(11) **EP 4 543 024 A1**

(12) **EUROPEAN PATENT APPLICATION**
published in accordance with Art. 153(4) EPC

(43) Date of publication:
**23.04.2025 Bulletin 2025/17**

(21) Application number: **22948070.2**

(22) Date of filing: **22.06.2022**

(51) International Patent Classification (IPC):
**H04N 21/485** (2011.01)    **H04N 21/466** (2011.01)
**G06N 3/08** (2023.01)    **G06N 20/00** (2019.01)

(52) Cooperative Patent Classification (CPC):
**H04N 21/4854; G06N 3/08; G06N 20/00;**
**G09G 5/003; H04N 21/25875; H04N 21/25891;**
**H04N 21/466; H04N 21/4755; H04N 21/485;**
G09G 2320/06; G09G 2320/0613;
G09G 2320/0626; G09G 2320/066;
G09G 2320/0666; G09G 2320/08

(86) International application number:
**PCT/KR2022/008840**

(87) International publication number:
**WO 2023/249136 (28.12.2023 Gazette 2023/52)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **LG Electronics Inc.**
**Yeongdeungpo-gu**
**Seoul 07336 (KR)**

(72) Inventors:
• **NAM, Yeonoh**
 Seoul 06772 (KR)
• **LEE, Myongyoung**
 Seoul 06772 (KR)
• **NAM, Sangchurl**
 Seoul 06772 (KR)
• **KANG, Seokpan**
 Seoul 06772 (KR)

(74) Representative: **Schornack, Oliver**
**Wuesthoff & Wuesthoff**
**Patentanwälte und Rechtsanwalt PartG mbB**
**Schweigerstraße 2**
**81541 München (DE)**

(54) **DISPLAY DEVICE AND METHOD FOR CONFIGURING IMAGE QUALITY OF SAME**

(57) The present disclosure relates to a method for configuring a personalized picture quality by reflecting a user's subjective picture quality preference characteristics, and the method may comprise: receiving a command for selecting a plurality of images from an image list; obtaining a plurality of scores of a plurality of picture quality elements corresponding to the plurality of respective images selected according to the received command; calculating an average score and a variance score of each picture quality element on the basis of the obtained plurality of scores; obtaining initial picture quality configuration values on the basis of the calculated average score and variance score; and generating picture quality configuration values adjusted from the initial picture quality configuration values by using an picture quality adjustment model.

FIG. 2

RECEIVE COMMAND FOR SELECTING A PLURALITY OF IMAGES — S201

OBTAIN PLURALITY OF SCORES OF A PLURALITY OF PICTURE QUALITY ELEMENTS CORRESPONDING TO EACH SELECTED IMAGE — S203

CALCULATE AVERAGE SCORE AND VARIANCE SCORE OF EACH OF THE PLURALITY OF PICTURE QUALITY ELEMENTS — S205

GENERATE TWO-DIMENSIONAL PICTURE QUALITY VECTOR — S207

OBTAIN INITIAL PICTURE QUALITY SETTING VALUES USING TWO-DIMENSIONAL PICTURE QUALITY VECTOR — S209

GENERATE PICTURE QUALITY SETTING ADJUSTMENT VALUES VALUES ADJUSTED FROM INITIAL PICTURE QUALITY SETTING VALUES USING PICTURE QUALITY ADJUSTMENT MODEL — S211

STORE GENERATED PICTURE QUALITY SETTING VALUES — S213

EP 4 543 024 A1

**Description**

[Technical Field]

The present disclosure relates to a display device and an operating method thereof.

[Background Art]

Digital TV services using wired or wireless communication networks are becoming widespread. Digital TV services can provide various services that were not available with existing analog broadcasting services.
For example, IPTV (Internet Protocol Television) and smart TV services, which are types of digital TV services, provide interactivity that allows users to actively select the type of program to watch and the viewing time. Based on this interactivity, IPTV and smart TV services can also provide various additional services, such as Internet search, home shopping, and online games.

[Invention]

[Technical Problem]

The present disclosure is to set a personalized picture quality by reflecting the user's subjective picture quality preference characteristics.
The present disclosure is also to enable a user who is not familiar with picture quality terms to set the optimal picture quality simply by selecting a preferred screen.

[Technical Solution]

A display device according to an aspect of embodiments may include a display configured to display an image list; and a controller configured to: receive a command to select a plurality of images from the image list, obtain a plurality of scores of a plurality of picture quality elements corresponding to each of the plurality of images selected according to the received command, calculate an average score and a variance score of each of the picture quality elements based on the obtained plurality of scores, obtain initial picture quality setting values based on the calculated average score and the variance score, and generate picture quality setting values adjusted from the initial picture quality setting values using an picture quality adjustment model.
A method of operating a display device according to another aspect of embodiments may include displaying an image list; receiving a command to select a plurality of images from the image list; obtaining a plurality of scores of a plurality of picture quality elements corresponding to each of the plurality of images selected according to the received command; calculating an average score and a variance score of each of the picture quality elements based on the obtained plurality of scores; obtaining initial picture quality setting values based on the calculated average score and the variance score; and generating picture quality setting values adjusted from the initial picture quality setting values using an picture quality adjustment model.

[Effect of the Invention]

According to an embodiment of the present disclosure, a personalized picture quality setting method can be provided by reflecting the user's subjective picture quality preference characteristics.
Accordingly, even a user who is not familiar with picture quality terms can be provided with a differentiated experience in which optimal picture quality is set simply by selecting a preferred screen.

[Description of Drawings]

FIG. 1 is a block diagram illustrating a configuration of a display device according to an embodiment of the present disclosure.
FIG. 2 is a flowchart for explaining a method for setting picture quality of a display device according to an embodiment of the present disclosure.
FIGS. 3A to 3C are diagrams explaining a process of a user selecting a plurality of images according to an embodiment of the present disclosure.

FIG. 4 is a diagram illustrating scores of picture quality elements of each of the selected images according to an embodiment of the present disclosure.

FIG. 5 is a diagram illustrating a two-dimensional picture quality vector according to an embodiment of the present disclosure.

FIG. 6A is a diagram for describing an average setting function according to an embodiment of the present disclosure, and FIG. 6B is a diagram for describing a penalty function.

FIG. 7A is a diagram for describing a picture quality adjustment model according to an embodiment of the present disclosure.

FIG. 7B is a diagram for explaining an output result of the picture quality adjustment model.

FIG. 8 is a diagram for describing a process of storing personalized picture quality setting values according to an embodiment of the present disclosure.

FIG. 9 is a diagram for describing a process of applying the stored picture quality setting values to an input image.

FIG. 10 is a diagram for describing an example of guiding a user to a difference in picture quality according to each of a default picture quality mode and a personalized picture quality mode according to an embodiment of the present disclosure.

FIG. 11 is a diagram for describing a process of receiving picture quality settings values of an external device together when receiving an image from an external device according to an embodiment of the present disclosure.

FIG. 12 is a diagram comparing an image selected by a user and a result image to which an output result of a picture quality adjustment model is applied according to an embodiment of the present disclosure.

FIG. 13 is a diagram illustrating an example of using images in which an output result of a picture quality adjustment model is reflected and images in which an output result of a picture quality adjustment model is not reflected according to an embodiment of the present disclosure.

[Best Mode]

Hereinafter, embodiments related to the present disclosure will be described in more detail with reference to the drawings. The suffixes "module" and "part" used for components in the following description are given or used interchangeably only for the convenience of writing the specification, and do not have distinct meanings or roles in themselves.

The video/audio (hereinafter, A/V) transmission device according to an embodiment of the present disclosure is an intelligent device that adds a computer-assisted function to a broadcast reception function, for example, and while remaining faithful to the broadcast reception function, it may have an Internet function, and the like, and may have a more convenient interface such as a manual input device, a touch screen, or a space remote-control. In addition, the device may perform functions such as email, web browsing, banking, or games by connecting to the Internet and a computer with the support of a wired or wireless Internet function. A standardized general-purpose OS may be used for these various functions.

Therefore, the A/V transmission device described in the present disclosure may perform various user-friendly functions since various applications may be freely added or deleted on, for example, a general-purpose OS kernel.

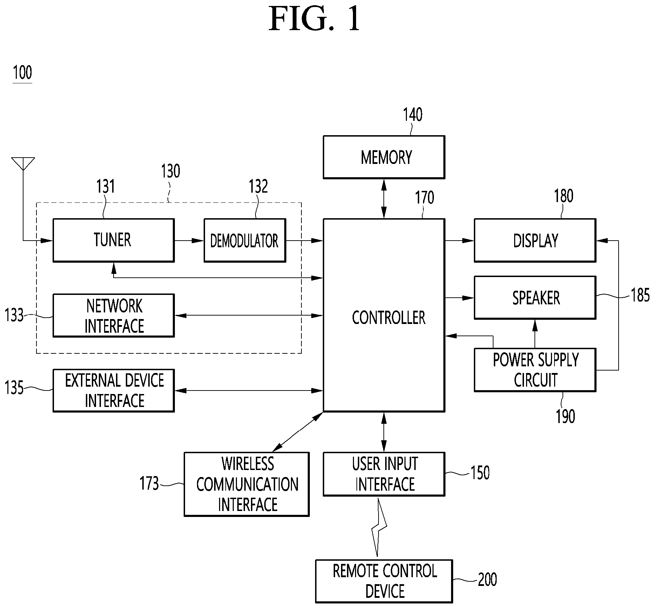

FIG. 1 is a block diagram illustrating a configuration of a display device according to an embodiment of the present disclosure.

Referring to FIG. 1, a display device 100 may include a broadcast reception module 130, an external device interface 135, a memory 140, a user input interface 150, a controller 170, a wireless communication interface 173, a microphone 175, a display 180, a speaker 185, and a power supply circuit 190.

The broadcast reception module 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulator 132 may divide the received broadcast signals into video signals, audio signals, and broadcast program-related data signals, and may restore the divided video signals, audio signals, and data signals into an output available form.

The external device interface 135 may receive an application or an application list in an adjacent external device and deliver the application or the application list to the controller 170 or the memory 140.

The external device interface 135 may provide a connection path between the display device 100 and an external device. The external device interface 135 may receive at least one of an image or audio outputted from an external device that is wirelessly or wirely connected to the display device 100 and deliver the received image or the audio to the controller. The external device interface 135 may include a plurality of external input terminals. The plurality of external input terminals may include an RGB terminal, at least one High Definition Multimedia Interface (HDMI) terminal, and a component terminal.

An image signal of an external device inputted through the external device interface 135 may be outputted through the display 180. A sound signal of an external device inputted through the external device interface 135 may be outputted through the speaker 185.

An external device connectable to the external device interface 135 may be one of a set-top box, a Blu-ray player, a DVD player, a game console, a sound bar, a smartphone, a PC, a USB Memory, and a home theater system but this is just exemplary.

The network interface 133 may provide an interface for connecting the display device 100 to a wired/wireless network comprising internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface 133 may access a predetermined webpage through an accessed network or another network linked to the accessed network. That is, the network interface 133 may transmit or receive data to or from a corresponding server by accessing a predetermined webpage through the network.

The network interface 133 may receive content or data provided from a content provider or a network operator. That is, the network interface 133 may receive content, such as movies, advertisements, games, VODs, and broadcast signals, which are provided from the content provider or the network operator, and information relating thereto through the network.

In addition, the network interface 133 may receive firmware update information and update files provided from the network operator, and may transmit data to the Internet or content provider or the network operator.

The network interface 133 may select and receive a desired application among applications open to the air, through network.

The memory 140 may store signal-processed image, voice, or data signals stored by a program in order for each signal processing and control in the controller 170.

In addition, the memory 140 may perform a function for temporarily storing image, voice, or data signals output from the external device interface 135 or the network interface 133, and may store information on a predetermined image through a channel memory function.

The memory 140 may store an application or an application list input from the external device interface 135 or the network interface 133.

The display device 100 may play content files (e.g., video files, still image files, music files, document files, application files, etc.) stored in the memory 140, and may provide the content files to a user.

The user input interface 150 may transmit signals input by a user to the controller 170, or may transmit signals from the controller 170 to a user. For example, the user input interface 150 may receive or process control signals such as power on/off, channel selection, and screen setting from the remote-control device 200 or transmit control signals from the controller 170 to the remote-control device 200 according to various communication methods such as Bluetooth, Ultra Wideband (WB), ZigBee, Radio Frequency (RF), and IR communication methods.

In addition, the user input interface 150 may transmit, to the controller 170, control signals input from local keys (not shown) such as a power key, a channel key, a volume key, and a setting key.

Image signals that are image-processed by the controller 170 may be input to the display 180 and displayed as images corresponding to the image signals. In addition, image signals that are image-processed by the controller 170 may be input to an external output device through the external device interface 135.

Voice signals processed by the controller 170 may be output to the speaker 185. In addition, voice signals processed by the controller 170 may be input to the external output device through the external device interface 135.

Additionally, the controller 170 may control overall operations of the display device 100.

In addition, the controller 170 may control the display device 100 by a user command or an internal program input through the user input interface 150, and may access the network to download a desired application or application list into the display device 100.

The controller 170 may output channel information selected by a user together with the processed image or voice signals through the display 180 or the speaker 185.

In addition, the controller 170 may output image signals or voice signals of an external device such as a camera or a camcorder, which are input through the external device interface 135, through the display 180 or the speaker 185, according to an external device image playback command received through the user input interface 150.

Moreover, the controller 170 may control the display 180 to display images, and may control the display 180 to display broadcast images input through the tuner 131, external input images input through the external device interface 135, images input through the network interface, or images stored in the memory 140. In this case, an image displayed on the display 180 may be a still image or video and also may be a 2D image or a 3D image.

Additionally, the controller 170 may play content stored in the display device 100, received broadcast content, and external input content input from the outside, and the content may be in various formats such as broadcast images, external input images, audio files, still images, accessed web screens, and document files.

The wireless communication circuit 173 may perform wired or wireless communication with an external device.

The wireless communication circuit 173 may perform short-range communication with an external device. For this, the wireless communication circuit 173 may support short-range communication by using at least one of Bluetooth™, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication circuit 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication circuit 173 may detect (or recognize) a wearable device capable of communication around the display device 100.

Furthermore, if the detected wearable device is a device authenticated to communicate with the display device 100, the controller 170 may transmit at least part of data processed in the display device 100 to the wearable device through the wireless communication circuit 173. Therefore, a user of the wearable device may use the data processed by the display device 100 through the wearable device.

The display 180 may convert image signals, data signals, or on-screen display (OSD) signals, which are processed in the controller 170, or images signals or data signals, which are received in the external device interface 135, into R, G, and B signals to generate driving signals.

Furthermore, the display device 100 shown in FIG. 1 is just one embodiment of the present disclosure and thus, some of the components shown may be integrated, added, or omitted according to the specification of the actually implemented display device 100.

That is, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike FIG. 1, the display device 100 may receive images through the network interface 133 or the external device interface 135 and play them without including the tuner 131 and the demodulator 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to FIG. 1, an image processing device such as the separated set-top box, and a content playback device including the display 180 and the speaker 185.

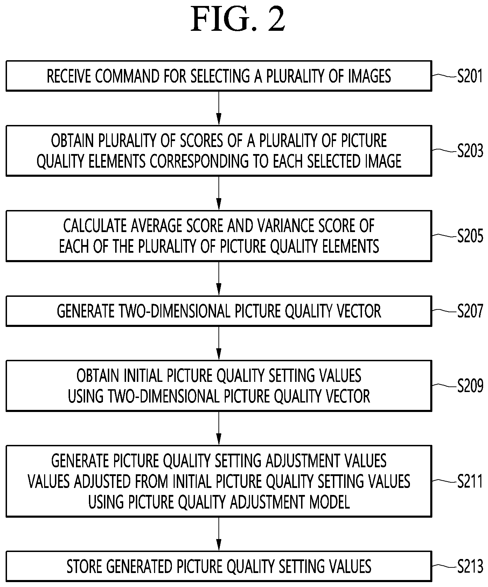

FIG. 2 is a flowchart for explaining a method for setting picture quality of a display device according to an embodiment of the present disclosure.

Referring to FIG. 2, the controller 170 of the display device 100 receives a command for selecting a plurality of images (step S201).

In an embodiment, the plurality of images may be stored in the memory 140. The plurality of images may have different values of picture quality factors. Each image may be matched with values corresponding to each of the plurality of picture quality factors.

In another embodiment, the plurality of images may be provided from an external device connected to the external device interface 135 of the display device 100 or a server connected to the network interface 133.

The controller 170 may display an image list on the display 180 and receive a command for selecting the plurality of images from the image list.

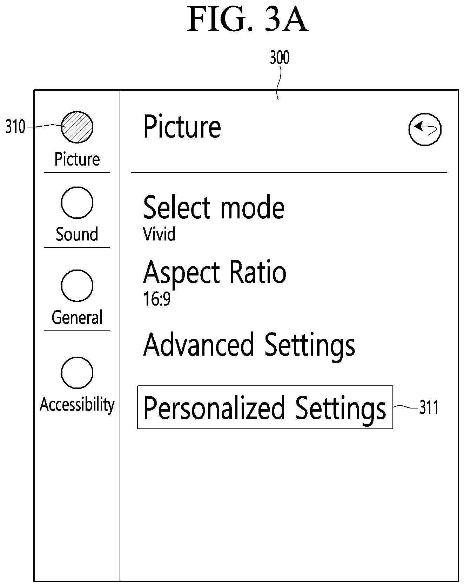

FIGS. 3A to 3C are diagrams explaining a process of a user selecting a plurality of images according to an embodiment of the present disclosure.

Hereinafter, the control of the UI screen may be performed according to a user input signal received from a remote-control device 200.

Referring to FIG. 3A, the controller 170 may display an execution screen 310 according to an execution request of a picture quality setting application installed on the display device 100.

An execution screen 300 may include a plurality of menu items for setting the picture quality of the image.

In the case that the image item 310 is selected among the plurality of menu items, a personalized setting item 311 may be displayed.

The personalized setting item 311 may be an item for providing the picture quality of the image in a personalized manner.

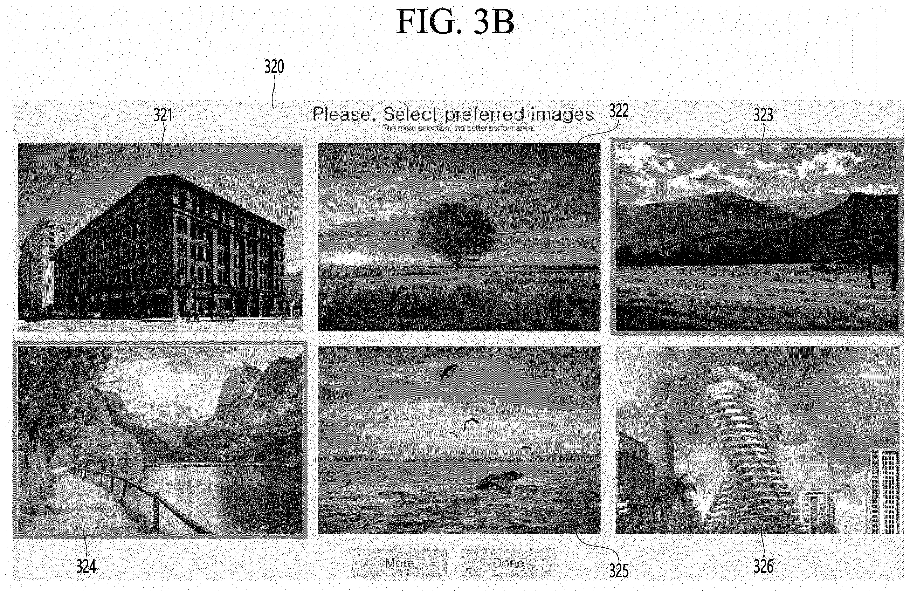

In the case that the personalized setting item 311 is selected, the controller 170 may display a first image list 320 as shown in FIG. 3B.

The first image list 320 may include a plurality of images 321 to 326. The image list 320 may be a list that guides a user to select an image that matches a specific set of picture quality factor values.

The set of picture quality factor values may include values scores of a plurality of picture quality factors.

The plurality of picture quality factors may include contrast, saturation, color temperature, sharpness, and brightness.

Each of the plurality of images 321 to 326 may have preset picture quality setting values applied. That is, the values of the picture quality factors of each image may be preset differently.

The user may select one or more images from the first image list 320.

The plurality of images 321 to 326 included in the first image list 320 may have values of the remaining elements except for the main picture quality element that are the same or have similar levels.

For example, the plurality of images 321 to 326 included in the first image list 320 may have different contrasts, and the values of the remaining picture quality elements except for the contrast may be the same. For example, in the case that the main picture quality element is not brightness, all images within the same page same list need to have the same average brightness.

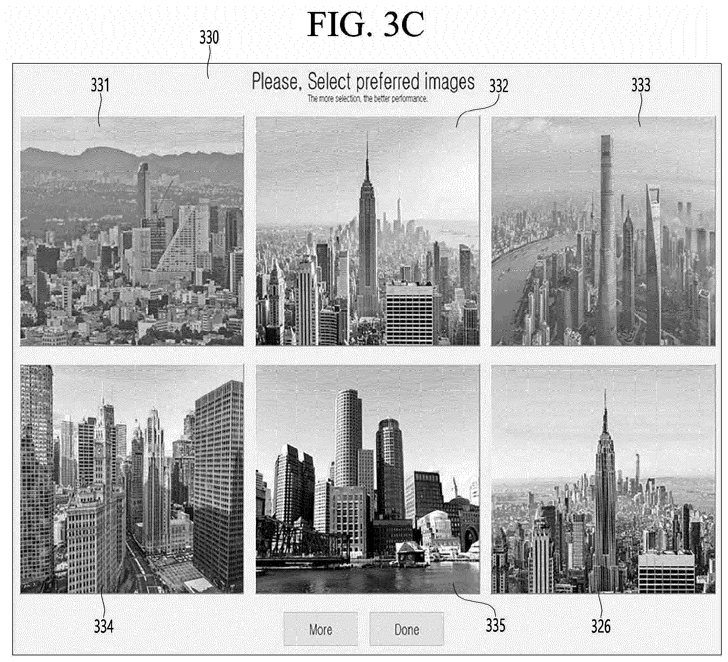

Meanwhile, after one or more images are selected from the first image list 320, the second image list 330 indicating the next page may be displayed, as shown in FIG. 3C.

The plurality of images 331 to 336 included in the second image list 330 may have different brightnesses, and the values of the remaining picture quality elements except for the brightness may be the same.

The user may select one or more images from the second image list 330.

In another embodiment, the main picture quality elements within the same page same list may be limited to a maximum of two. For example, within the first image list 320, each image may have different contrast and sharpness, and the remaining picture quality elements may be the same. Accordingly, confusion that may arise in the user's selection may be minimized.

Through this process, the user may select a preferred image for each page.

Meanwhile, the images selected through FIG. 3B and FIG. 3C may be images of the same type. The types of images may include landscapes, people, and the like.

Again, FIG. 2 will be described.

The controller 170 obtains a plurality of scores of the plurality of picture quality elements corresponding to each selected image (step S203).

The controller 10 may know the scores of the picture quality elements of each image in advance.

In one embodiment, the scores of the picture quality elements of the image may be stored in the memory 140.

In another embodiment, the controller 170 may request picture quality element information for the selected images from the server and receive quality element information including the quality scores of each image from the server. That is, the controller 10 may obtain scores of the plurality of picture quality elements corresponding to each selected image from the server.

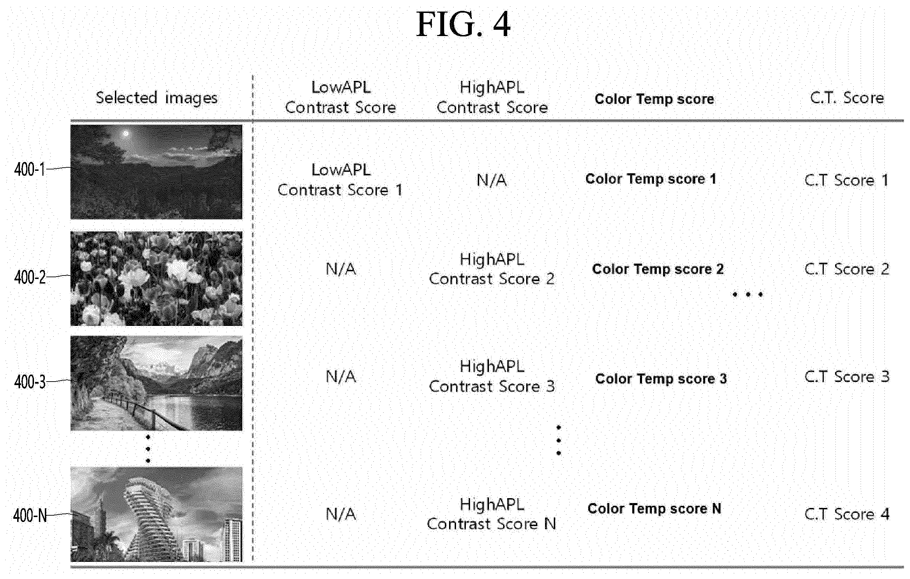

FIG. 4 is a diagram illustrating scores of picture quality elements of each of the selected images according to an embodiment of the present disclosure.

It is assumed that N images 400-1 to 400-N are selected by the user's selection.

Referring to FIG. 4, the scores of quality elements of each of the N images 400-1 to 400-N are illustrated.

The scores of picture quality elements may be predetermined for each image.

Again, FIG. 2 is described.

The controller 170 calculates an average score and a variance score of each of the plurality of picture quality elements (step S205).

The controller 170 may calculate an average and a variance of scores of first picture quality elements of each of the N images 400-1 to 400-N.

Similarly, the controller 170 may calculate an average and a variance of scores of second picture quality elements of each of the N images 400-1 to 400-N.

The controller 170 generates a two-dimensional picture quality vector based on a plurality of average scores and a plurality of variance scores obtained based on the calculation results (step S207).

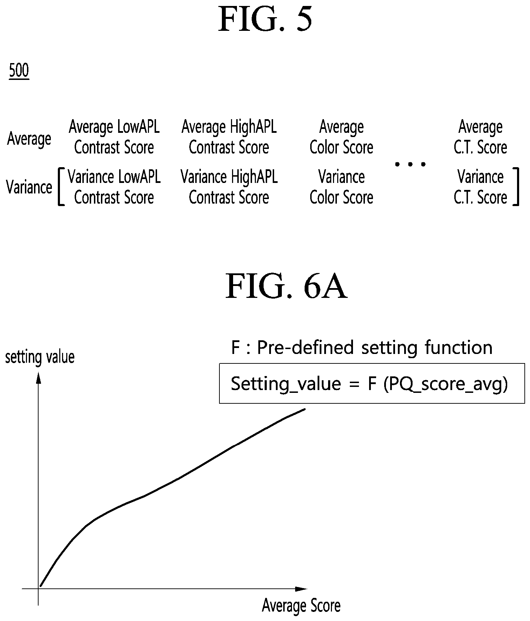

FIG. 5 is a diagram illustrating a two-dimensional picture quality vector according to an embodiment of the present disclosure.

The two-dimensional picture quality vector 500 may be a vector including averages and variances of scores of a plurality of picture quality elements of each of the selected images.

The two-dimensional picture quality vector 500 may be used later to determine initial picture quality setting values.

FIG. 2 will be described again.

The controller 170 obtains initial picture quality setting values using the two-dimensional picture quality vector (step S209).

In one embodiment, the controller 170 may obtain the initial picture quality setting values using the average and variance of each picture quality element. Specifically, the controller 170 may calculate the initial picture quality setting value for each picture quality element using following [Equation 1].

[Equation 1]

$$Initial\_PQ\_setting\_value = FPQ\_score\_avg * GPQ\_score\_var + default\_setting\_value * [1\text{-}GPQ\_score\_var]$$

Here, PQ is a picture quality element as Picture Quality, PQ_score_avg is an average of scores of picture quality elements, and F is a predefined average setting function.

PQ_score_var is a variance of scores of picture quality elements, and G is a predefined penalty function. The value of the penalty function may range from 0 to 1.

default_setting_value may be a value set as a default for the picture quality element.

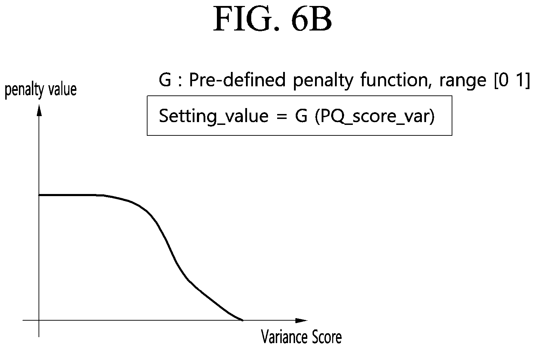

FIG. 6A is a diagram for describing an average setting function according to an embodiment of the present disclosure, and FIG. 6B is a diagram for describing a penalty function.

First, referring to FIG. 6A, the value of the average setting function may be proportional to the average of the scores.

This is because the average of the scores for the picture quality element is reliable.

Referring to FIG. 6B, the value of the penalty function may be closer to 0 as the dispersion of the scores increases.

This is because the reliability decreases as the dispersion of the scores for the picture quality element increases.

When the dispersion of the scores increases, the value of the corresponding picture quality element is difficult to trust, so the value of the penalty function may increase as the dispersion decreases, and the value of the penalty function may decrease as the dispersion increases.

The value of the penalty function may have a range of 0 to 1.

Again, FIG. 2 is described.

The controller 170 may obtain the initial picture quality setting values by calculating the initial picture quality setting values for each of the plurality of picture quality elements using [Equation 1].

The controller 170 generates picture quality setting adjustment values adjusted from the initial picture quality setting values using a picture quality adjustment model (step S211).

In one embodiment, the picture quality adjustment model may be a model based on an artificial neural network that is supervisedly learned according to a deep learning algorithm or a machine learning algorithm.

The picture quality adjustment model may be a model that infers processed picture quality setting values based on the correlation between picture quality elements.

Specifically, the picture quality adjustment model may be a model for inferring the adjusted picture quality setting values from the initial picture quality setting values.

The picture quality adjustment model may be stored in the memory 140 or stored in a server.

In the case that the picture quality adjustment model is stored in the server, the controller 170 may receive the picture quality setting adjustment values acquired by the server from the server.

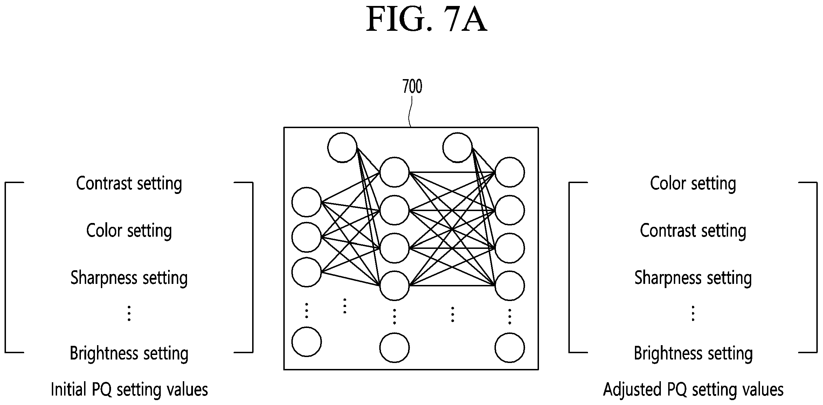

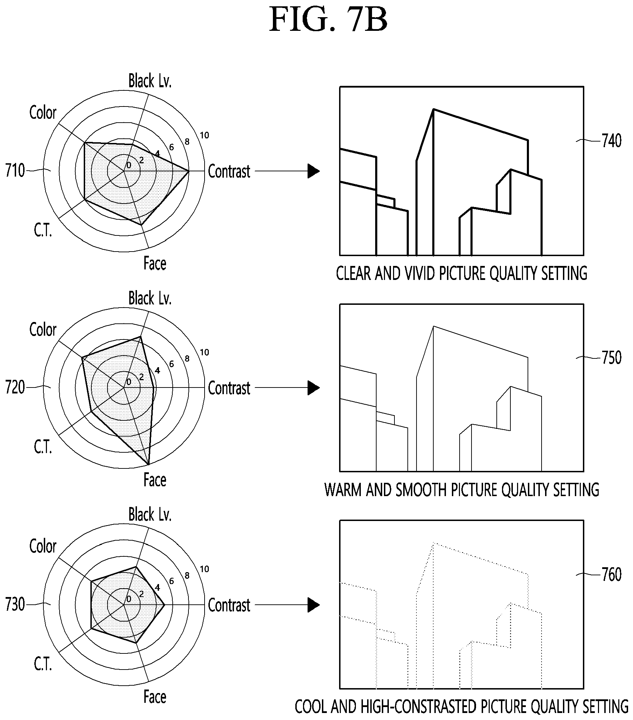

FIG. 7A is a diagram for describing a picture quality adjustment model according to an embodiment of the present disclosure, and FIG. 7B is a diagram for explaining an output result of the picture quality adjustment model.

The picture quality adjustment model 700 may be a model learned through supervised learning. A training data set used for learning the picture quality adjustment model may include picture quality setting values of the plurality of picture quality elements and labeling data labeled with the picture quality setting values.

The labeling data may be correct data reflecting the correlation between the picture quality elements. The labeling data may be based on statistical data considering combinations between various picture quality elements.

The controller 170 may obtain an input feature vector from the picture quality setting values, and may infer a target feature vector from the input feature vector using the picture quality adjustment model 700.

The controller 170 may learn the picture quality adjustment model 700 so that a loss function representing the difference between the input feature vector and the target feature vector is minimized.

The controller 170 may obtain adjusted PQ setting values from the initial PQ setting values using the learned picture quality adjustment model 700.

Meanwhile, the parameters of the picture quality adjustment model may be updated by the values of the picture quality elements of each image selected by the user. For example, the parameters of the picture quality adjustment model may have their weights adjusted in proportion to the average score of the picture quality elements of each image selected by the user.

The user may have an inquiry about the performance of the picture quality adjustment model or may want to re-learn the picture quality adjustment model.

In this case, the values of the picture quality elements of the images selected in FIGS. 3B and 3C may be excluded from the learning of the picture quality adjustment model.

Conversely, the values of the picture quality elements of the images not selected or re-selected in FIGS. 3B and 3C may be used for learning the picture quality adjustment model.

In another embodiment, the training data set used for learning the picture quality adjustment model may be obtained based on the same type of images. The types of images may include games, dramas, sports, movies, and the like.

The picture quality adjustment model may be learned by distinguishing the learning data group according to the type of image. Accordingly, the picture quality adjustment model may exist as many as the number of image types.

Referring to FIG. 7B, picture quality element setting sets 710, 720, and 730 which are output results of the picture quality adjustment model 700 and images 740, 750, and 760 reflecting each set are illustrated.

The first picture quality element setting set 710 is a set corresponding to a clear and vivid picture quality, the second picture quality element setting set 720 is a set corresponding to a warm and soft picture quality, and the third picture quality element setting set 730 is a set corresponding to a cool and high-contrast picture quality.

Again, FIG. 2 is described.

The controller 170 stores the generated picture quality setting values in the memory 140 or the server (step S213).

The picture quality mode of the image may include a default mode and a personalized setting mode.

The default mode may be a mode in which the values of the plurality of picture quality elements are set as default.

The personalized setting mode may be a mode in which the values of the plurality of picture quality elements are set in consideration of the user's image selection.

When the picture quality mode of the image is set to the personalized setting mode, the controller 170 may use the picture quality setting adjustment values stored in step S213.

That is, the controller 170 may apply the stored picture quality setting adjustment values to the image when playing the image and output the image.

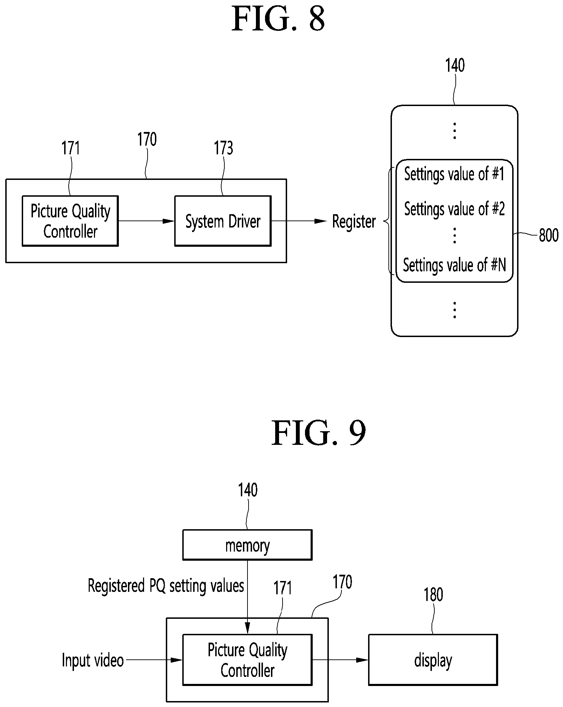

FIG. 8 is a diagram for describing a process of storing personalized picture quality setting values according to an embodiment of the present disclosure, and FIG. 9 is a diagram for describing a process of applying the stored picture quality setting values to an input image.

Referring to FIG. 8, the controller 171 may include a picture quality controller 171 and a system driver 173.

The picture quality controller 171 may obtain picture quality setting values adjusted based on images selected by the user according to the embodiment illustrated in FIG. 2, and transmit the obtained picture quality setting values to the system driver 173.

The system driver 173 may register picture quality setting values 800 in the memory 140.

In another embodiment, the system driver 173 may register picture quality setting values to the server via the network interface 133.

Meanwhile, the memory 140 or the server may store picture quality setting value sets corresponding to each of a plurality of users.

The picture quality setting value set may include a plurality of picture quality setting values.

That is, the picture quality setting value sets may be different for each user.

The controller 170 may provide a picture quality setting value set corresponding to a user identified through a user identification process.

Next, FIG. 9 will be described.

FIG. 9 is described assuming that the picture quality mode operates in a personalized setting mode.

The picture quality controller 171 may apply picture quality setting values stored in the memory 140 to the input image.

The picture quality controller 171 may control the display 180 to output an image having the stored picture quality setting values.

The picture quality controller 171 may control data applied to a plurality of pixels constituting the display 180 to output an image having the stored picture quality setting values.

In this way, according to the embodiment of the present disclosure, a personalized picture quality setting method may be provided by reflecting the subjective picture quality preference characteristics of the user.

Accordingly, even a user who is not familiar with picture quality terms may be provided with a differentiated experience in which the optimal quality is set simply by selecting a preferred screen.

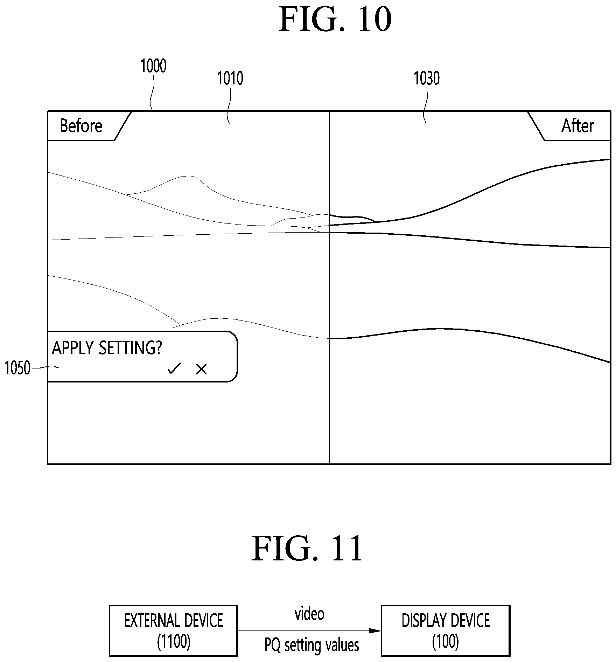

FIG. 10 is a diagram for describing an example of guiding a user to a difference in picture quality according to each of a default picture quality mode and a personalized picture quality mode according to an embodiment of the present disclosure.

Referring to FIG. 10, a sample image 1000 including a first partial image 1010 to which default setting values are applied before the embodiment of FIG. 2 is applied and a second partial image 1030 to which picture quality setting values adjusted according to the embodiment of FIG. 2 are applied is illustrated.

After the controller 170 obtains the adjusted picture quality setting values, the controller 170 may display the first partial image 1010 before the application of the adjusted picture quality setting values and the second partial image 1030 after the application on the display 180 through the sample image 1000.

In addition, the controller 170 may further display a pop-up window 1050 on the display 180 that asks about the application of the adjusted picture quality settings.

The user may visually distinguish the first partial image 1010 and the second partial image 1030 and decide whether to set a personalized picture quality.

FIG. 11 is a diagram for describing a process of receiving picture quality settings values of an external device together when receiving an image from an external device according to an embodiment of the present disclosure.

The external device 1100 may be a smartphone or a smart pad, but this is merely an example.

The picture quality settings values of the external device 1100 may be values set according to the embodiment of FIG. 2, or may be values set through another method.

The display device 100 may receive an image from an external device 1100 connected to the external device interface 135 or the wireless communication interface 173.

When the display device 100 receives an image from the external device 1100, it may also receive the picture quality setting values of the external device 1100.

The display device 100 may utilize the received picture quality setting values as setting values of a personalized setting mode.

When the user of the external device 1100 and the display device 100 is the same, the user may utilize the picture quality setting values of the external device 1100 without a separate picture quality setting process through the display device 100.

In another embodiment, the picture quality setting values received from the external device 1100 may be used as learning data of the picture quality adjustment model.

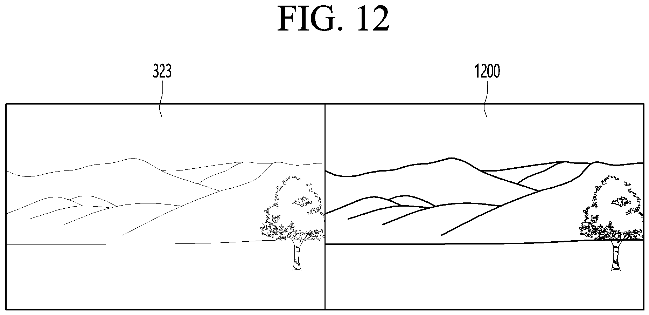

FIG. 12 is a diagram comparing an image selected by a user and a result image to which an output result of a picture quality adjustment model is applied according to an embodiment of the present disclosure.

Referring to FIG. 12, an image 323 selected by a user in FIG. 3B and a result image 1200 in which the selected image 323 reflects the picture quality setting values, which are the output result of the picture quality adjustment model, are illustrated.

After the output result of the picture quality adjustment model is obtained, the display device 100 may simultaneously display the arbitrary image 323 among the selected plurality of images and a result image 1200 in which the picture quality setting values are reflected in the corresponding image 323 on the display 180.

The controller 170 may recognize that when the image 323 is selected, it requests improvement of the picture quality adjustment model.

That is, the user may not be satisfied with the output result of the picture quality adjustment model.

The controller 170 may re-learn the picture quality adjustment model using the values of the picture quality elements corresponding to the selected image 323.

As another example, the controller 170 may transmit the values of the picture quality elements corresponding to the selected image 323 to the server via the network interface 133.

The server may learn the picture quality adjustment model using the values of the received picture quality elements as learning data.

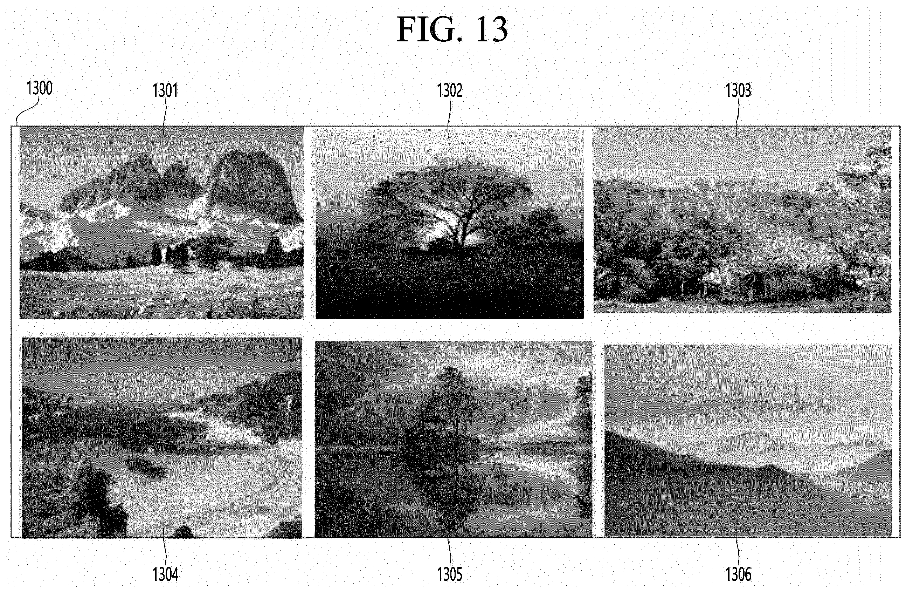

FIG. 13 is a diagram illustrating an example of using images in which an output result of a picture quality adjustment model is reflected and images in which an output result of a picture quality adjustment model is not reflected according to an embodiment of the present disclosure.

Referring to FIG. 13, the controller 170 may display an image list 1300 including a plurality of images 1301 to 1306 on the display 180.

Among the plurality of images 1301 to 1306, the first image 1301, the third image 1303, and the fifth image 1305 may be images in which the output result of the picture quality adjustment model is reflected, and the second image 1302, the fourth image 1304, and the sixth image 1306 may be images in which the output result of the picture quality adjustment model is not reflected.

The first image 1301, the third image 1303, and the fifth image 1305 and the second image 1302, the fourth image 1304, and the sixth image 1306 may be displayed separately from each other.

The image list 1300 may be a list displayed for a user's selection, as in the embodiment of FIG. 3B.

In this way, the images reflecting the output results of the picture quality adjustment model may be provided, so that a user-customized picture quality setting may be made.

According to one embodiment of the present disclosure, the above-described method may be implemented as a code that may be read by a processor on a medium in which a program is recorded. Examples of the medium that may be read by a processor include a ROM, a RAM, a CD-ROM, a magnetic tape, a floppy disk, an optical data storage device, and the like.

The display device described above is not limited to the configuration and method of the embodiments described above, and the embodiments may be configured by selectively combining all or part of the embodiments so that various modifications may be made.

**Claims**

1. A display device, comprising:

   a display configured to display an image list; and
   a controller configured to:

   receive a command to select a plurality of images from the image list,
   obtain a plurality of scores of a plurality of picture quality elements corresponding to each of the plurality of images selected according to the received command,
   calculate an average score and a variance score of each of the picture quality elements based on the obtained plurality of scores,
   obtain initial picture quality setting values based on the calculated average score and the variance score, and
   generate picture quality setting values adjusted from the initial picture quality setting values using a picture quality adjustment model.

2. The display device of claim 1,

   further comprising a memory configured to store the adjusted picture quality setting values, and
   wherein the controller is configured to:
   output an image reflecting the picture quality setting values stored in an input image on the display.

3. The display device of claim 1,
   wherein the controller is configured to:

   generate a two-dimensional picture quality vector based on the plurality of average scores and the plurality of variance scores corresponding to the plurality of picture quality elements, and
   obtain the initial picture quality setting values using the generated two-dimensional picture quality vector.

4. The display device of claim 3,

   [Equation 1]

   $\text{Initial\_PQ\_setting\_value} = F(\text{PQ\_score\_avg}) * G(\text{PQ\_score\_var}) + \text{default\_setting\_value} * [1\text{-}G(\text{PQ\_score\_var})]$

   wherein the controller is configured to obtain the initial picture quality setting values by using following [Equation 1]
   [Equation 1] Initial_PQ_setting_value = F(PQ_score_avg) * G(PQ_score_var) + default_setting_value * [1-G(PQ_score_var)]
   PQ (Picture Quality) is a picture quality element, PQ_score_avg is an average score of scores of the picture quality elements, F is a predefined average setting function, PQ_score_var is a variance score of the picture quality element, G is a predefined penalty function having a range from 0 to 1, and default_setting_value is a value set as a default for the picture quality element.

5. The display device of claim 1,

   wherein the picture quality adjustment model is an artificial neural network-based model that is supervised learning through deep learning or machine learning, and
   wherein a training data set used for learning the picture quality adjustment model includes picture quality setting values of the plurality of picture quality elements and labeling data labeled with picture quality setting values, and the labeling data is correct data reflecting a correlation between the picture quality elements.

6. The display device of claim 1,

wherein the controller is configured to sequentially display a plurality of image lists, and

wherein the images included in each of the image list have different values for one picture quality element and the values for remaining picture quality elements are the same.

7. The display device of claim 1,
wherein the controller is configured to display a first image to which default setting values are applied for the same image and a second image to which the picture quality setting values are applied on the display.

8. A method for setting picture quality of a display device, comprising:

displaying an image list;
receiving a command to select a plurality of images from the image list;
obtaining a plurality of scores of a plurality of picture quality elements corresponding to each of the plurality of images selected according to the received command;
calculating an average score and a variance score of each of the picture quality elements based on the obtained plurality of scores;
obtaining initial picture quality setting values based on the calculated average score and the variance score; and
generating picture quality setting values adjusted from the initial picture quality setting values using a picture quality adjustment model.

9. The method of claim 8, further comprising:

storing the adjusted picture quality setting values, and
outputting an image reflecting the picture quality setting values stored in an input image.

10. The method of claim 8,
wherein obtaining the initial picture quality setting values includes:

generating a two-dimensional picture quality vector based on the plurality of average scores and the plurality of variance scores corresponding to the plurality of picture quality elements, and
obtaining the initial picture quality setting values using the generated two-dimensional picture quality vector.

11. The method of claim 10,
obtaining the initial picture quality setting values using the generated two-dimensional picture quality vector includes:

obtaining the initial picture quality setting values by using following [Equation 1]

[Equation 1]

$$\text{Initial\_PQ\_setting\_value} = F(\text{PQ\_score\_avg}) * G(\text{PQ\_score\_var}) + \text{default\_setting\_value} * [1\text{-}G(\text{PQ\_score\_var})]$$

PQ (Picture Quality) is a picture quality element, PQ_score_avg is an average score of scores of the picture quality elements, F is a predefined average setting function, PQ_score_var is a variance score of the picture quality element, G is a predefined penalty function having a range from 0 to 1, and default_setting_value is a value set as a default for the picture quality element.

12. The method of claim 8,

wherein the picture quality adjustment model is an artificial neural network-based model that is supervised learning through deep learning or machine learning, and
wherein a training data set used for learning the picture quality adjustment model includes picture quality setting values of the plurality of picture quality elements and labeling data labeled with picture quality setting values, and
the labeling data is correct data reflecting a correlation between the picture quality elements.

13. The method of claim 8, further comprising:

sequentially displaying a plurality of image lists, and
wherein the images included in each of the image list have different values for one picture quality element and the values for remaining picture quality elements are the same.

**14.** The method of claim 8, further comprising:
displaying a first image to which default setting values are applied for the same image and a second image to which the picture quality setting values are applied on the display.

# FIG. 1

100

140
MEMORY

130
131
TUNER

132
DEMODULATOR

170
CONTROLLER

180
DISPLAY

133
NETWORK INTERFACE

185
SPEAKER

135
EXTERNAL DEVICE INTERFACE

POWER SUPPLY CIRCUIT

190

173
WIRELESS COMMUNICATION INTERFACE

150
USER INPUT INTERFACE

200
REMOTE CONTROL DEVICE

# FIG. 2

RECEIVE COMMAND FOR SELECTING A PLURALITY OF IMAGES — S201

OBTAIN PLURALITY OF SCORES OF A PLURALITY OF PICTURE QUALITY ELEMENTS CORRESPONDING TO EACH SELECTED IMAGE — S203

CALCULATE AVERAGE SCORE AND VARIANCE SCORE OF EACH OF THE PLURALITY OF PICTURE QUALITY ELEMENTS — S205

GENERATE TWO-DIMENSIONAL PICTURE QUALITY VECTOR — S207

OBTAIN INITIAL PICTURE QUALITY SETTING VALUES USING TWO-DIMENSIONAL PICTURE QUALITY VECTOR — S209

GENERATE PICTURE QUALITY SETTING ADJUSTMENT VALUES VALUES ADJUSTED FROM INITIAL PICTURE QUALITY SETTING VALUES USING PICTURE QUALITY ADJUSTMENT MODEL — S211

STORE GENERATED PICTURE QUALITY SETTING VALUES — S213

# FIG. 3A

300

Picture

310 — Picture

Sound

General

Accessibility

Picture

Select mode
Vivid

Aspect Ratio
16:9

Advanced Settings

Personalized Settings — 311

# FIG. 3B

Please, Select preferred images
The more selection, the better performance.

More    Done

# FIG. 3C

330

331    Please, Select preferred images    332    333
The more selection, the better performance.

334    More    Done    335    326

# FIG. 4

| Selected images | LowAPL Contrast Score | HighAPL Contrast Score | Color Temp score | C.T. Score |
|---|---|---|---|---|
| 400-1 | LowAPL Contrast Score 1 | N/A | Color Temp score 1 | C.T Score 1 |
| 400-2 | N/A | HighAPL Contrast Score 2 | Color Temp score 2 | C.T Score 2 |
| 400-3 | N/A | HighAPL Contrast Score 3 | Color Temp score 3 | C.T Score 3 |
| 400-N | N/A | HighAPL Contrast Score N | Color Temp score N | C.T Score 4 |

EP 4 543 024 A1

# FIG. 5

500

$$\begin{array}{c} \text{Average} \\ \text{Variance} \end{array} \begin{bmatrix} \begin{array}{c} \text{Average LowAPL} \\ \text{Contrast Score} \\ \text{Variance LowAPL} \\ \text{Contrast Score} \end{array} & \begin{array}{c} \text{Average HighAPL} \\ \text{Contrast Score} \\ \text{Variance HighAPL} \\ \text{Contrast Score} \end{array} & \begin{array}{c} \text{Average} \\ \text{Color Score} \\ \text{Variance} \\ \text{Color Score} \end{array} \cdots & \begin{array}{c} \text{Average} \\ \text{C.T. Score} \\ \text{Variance} \\ \text{C.T. Score} \end{array} \end{bmatrix}$$

# FIG. 6A

setting value

F : Pre-defined setting function

Setting_value = F (PQ_score_avg)

Average Score

# FIG. 6B

G : Pre-defined penalty function, range [0 1]

Setting_value = G (PQ_score_var)

penalty value

Variance Score

# FIG. 7A

700

Contrast setting

Color setting

Sharpness setting

⋮

Brightness setting

Initial PQ setting values

Color setting

Contrast setting

Sharpness setting

⋮

Brightness setting

Adjusted PQ setting values

EP 4 543 024 A1

# FIG. 7B

CLEAR AND VIVID PICTURE QUALITY SETTING

WARM AND SMOOTH PICTURE QUALITY SETTING

COOL AND HIGH-CONSTRASTED PICTURE QUALITY SETTING

# FIG. 8

140

171    170    173

Picture Quality Controller → System Driver → Register

Settings value of #1
Settings value of #2
⋮
Settings value of #N

800

# FIG. 9

140

memory

Registered PQ setting values    171    170    180

Input video → Picture Quality Controller → display

# FIG. 10

1000    1010    1030

| Before | | After |
|---|---|---|

APPLY SETTING?

✓  ✕

1050

# FIG. 11

| EXTERNAL DEVICE (1100) | → | DISPLAY DEVICE (100) |
|---|---|---|

video

PQ setting values

# FIG. 12

# FIG. 13

## INTERNATIONAL SEARCH REPORT

| International application No. |
| --- |
| **PCT/KR2022/008840** |

| | |
| --- | --- |
| **A.** | **CLASSIFICATION OF SUBJECT MATTER** |

**H04N 21/485**(2011.01)i; **H04N 21/466**(2011.01)i; **G06N 3/08**(2006.01)i; **G06N 20/00**(2019.01)i

According to International Patent Classification (IPC) or to both national classification and IPC

| | |
| --- | --- |
| **B.** | **FIELDS SEARCHED** |

Minimum documentation searched (classification system followed by classification symbols)

H04N 21/485(2011.01); G06T 5/00(2006.01); G09G 5/00(2006.01); H04N 17/00(2006.01); H04N 21/232(2011.01); H04N 21/45(2011.01); H04N 5/445(2011.01); H04N 5/45(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 화질(image quality), 평균(average), 스코어(score), 이미지(image), 신경망(neural network)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | KR 10-1566194 B1 (SAMSUNG ELECTRONICS CO., LTD.) 06 November 2015 (2015-11-06)<br>See paragraphs [0009]-[0029]; claim 1; and figures 1-6. | 1-14 |
| A | KR 10-2019-0104927 A (LG ELECTRONICS INC.) 11 September 2019 (2019-09-11)<br>See paragraphs [0037]-[0193]; claims 1-2; and figures 1-10. | 1-14 |
| A | KR 10-0617090 B1 (LG ELECTRONICS INC.) 31 August 2006 (2006-08-31)<br>See paragraphs [0032]-[0068]; and figures 1-5. | 1-14 |
| A | CN 108401154 A (TONGJI UNIVERSITY) 14 August 2018 (2018-08-14)<br>See paragraphs [0078]-[0152]; and figures 1-4. | 1-14 |
| A | US 2008-0043031 A1 (JAGMAG, Adil I.) 21 February 2008 (2008-02-21)<br>See paragraphs [0027]-[0075]; and figures 1-6. | 1-14 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 March 2023** | **15 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

| International application No. |
| --- |
| **PCT/KR2022/008840** |

| Patent document cited in search report | | | Publication date (day/month/year) | Patent family member(s) | | | Publication date (day/month/year) |
| --- | --- | --- | --- | --- | --- | --- | --- |
| KR | 10-1566194 | B1 | 06 November 2015 | US | 2010-0020238 | A1 | 28 January 2010 |
| | | | | US | 8310594 | B2 | 13 November 2012 |
| KR | 10-2019-0104927 | A | 11 September 2019 | US | 2020-0005100 | A1 | 02 January 2020 |
| KR | 10-0617090 | B1 | 31 August 2006 | | None | | |
| CN | 108401154 | A | 14 August 2018 | CN | 108401154 | B | 14 August 2020 |
| US | 2008-0043031 | A1 | 21 February 2008 | CN | 101617286 | A | 30 December 2009 |
| | | | | EP | 2059867 | A1 | 20 May 2009 |
| | | | | WO | 2008-021710 | A1 | 21 February 2008 |

Form PCT/ISA/210 (patent family annex) (July 2019)